(19) Europäisches Patentamt / European Patent Office / Office européen des brevets

(11) **EP 4 696 655 A1**

(12) **EUROPEAN PATENT APPLICATION**
published in accordance with Art. 153(4) EPC

(43) Date of publication:
**18.02.2026 Bulletin 2026/08**

(21) Application number: **24788747.4**

(22) Date of filing: **10.04.2024**

(51) International Patent Classification (IPC):
**C01F 5/06** (2006.01)   **C21D 8/12** (2026.01)

(52) Cooperative Patent Classification (CPC):
**C01F 5/06; C21D 8/12**

(86) International application number:
**PCT/JP2024/014484**

(87) International publication number:
**WO 2024/214723 (17.10.2024 Gazette 2024/42)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **10.04.2023   JP 2023063670**

(71) Applicant: NIPPON STEEL CORPORATION
Chiyoda-ku
Tokyo 100-8071 (JP)

(72) Inventors:
- **YAMAGATA Ryutaro**
  **Tokyo 100-8071 (JP)**
- **TAKEDA Kazutoshi**
  **Tokyo 100-8071 (JP)**
- **TAKAHASHI Takafumi**
  **Tokyo 100-8071 (JP)**

(74) Representative: **Vossius & Partner**
**Patentanwälte Rechtsanwälte mbB**
**Siebertstrasse 3**
**81675 München (DE)**

(54) **MGO POWDER, MGO SLURRY, METHOD FOR PRODUCING SAME, AND METHOD FOR PRODUCING GRAIN-ORIENTED ELECTROMAGNETIC STEEL SHEET**

(57)   This MgO powder has an MgO content of 90% or more, in which a mass of plate-like particles is 10% to 85% of a total mass of the MgO powder, and $Lf_{ave}/Lg_{ave}$ is 1.00 or more, where an average particle size of plate-like particles is indicated by $Lf_{ave}$ and an average particle size of the granular particles is indicated by $Lg_{ave}$.

EP 4 696 655 A1

**Description**

TECHNICAL FIELD

The present invention relates to an MgO powder, an MgO slurry, methods of manufacturing the same, and a method of manufacturing a grain-oriented electrical steel sheet using the same.
Priority is claimed on Japanese Patent Application No. 2023-063670, filed April 10, 2023, the content of which is incorporated herein by reference.

BACKGROUND ART

A grain-oriented electrical steel sheet is a soft magnetic material and is mainly used as a core material of a transformer. Therefore, the grain-oriented electrical steel sheet is required to have magnetic properties such as high magnetization properties and low iron loss. The iron loss is a power loss that is consumed as thermal energy in a case where a core is excited by an alternating magnetic field, and the iron loss is required to be as low as possible from the viewpoint of energy saving.

In the manufacturing of the grain-oriented electrical steel sheet, a manufacturing method including steps of hot rolling, hot-rolled sheet annealing, cold rolling, decarburization annealing, and final annealing is generally applied to a slab adjusted to a predetermined chemical composition. Among these steps, in the final annealing step, the steel sheet wound in a coil shape is annealed at a high temperature for a long period of time to aggregate crystal orientations into a Goss orientation having good magnetic properties (to increase the orientation development degree). Here, in order to prevent sticking of the coil, an annealing separating agent is applied.

As the annealing separating agent applied to the coil, an annealing separating agent primarily containing magnesium oxide (MgO) is often used. The reason for this is that, by using the annealing separating agent primarily containing MgO, $SiO_2$ on a surface of the steel sheet and MgO react with each other during the final annealing, so that a forsterite ($Mg_2SiO_4$)-based coating (primary coating) can be formed on the surface of the steel sheet. The primary coating serves to apply tension to the surface of the steel sheet and to impart insulation properties to the steel sheet. By using the annealing separating agent primarily containing MgO, it is possible to prevent sticking during final annealing and to improve the magnetic properties of the grain-oriented electrical steel sheet.

As described above, in the manufacturing of the grain-oriented electrical steel sheet, the properties of the grain-oriented electrical steel sheet can be changed by the annealing separating agent. Therefore, in recent years, studies have been conducted on trace components contained in magnesium oxide contained in the annealing separating agent. In addition, not only the amounts of the trace components but also structures of compounds containing the trace component elements in magnesium oxide for the annealing separating agent have been examined.

For example, Patent Document 1 discloses a powder for an annealing separating agent containing 0.04 mass% or more and 0.30 mass% or less of boron and having magnesium oxide as a primary component, in which a proportion of three-coordinate boron in the boron is 70% or more and 95% or less.

Patent Document 2 discloses a method of manufacturing a powder for an annealing separating agent, the method including calcining a raw material containing one or both of magnesium hydroxide and magnesium carbonate and boron, and then adjusting a proportion of three-coordinate boron by controlling a humidity of a calcined product, in which the proportion of the three-coordinate boron in the boron contained in the powder for an annealing separating agent is 70% or more and 95% or less.

In both Patent Documents 1 and 2, the proportion of the three-coordinate boron is specified based on the findings that 1) purification of impurities is affected by a coating reaction behavior at a high temperature (1100°C or higher), 2) the coating reaction behavior at a high temperature boron is affected by the presence of boron in the three-coordinate form, and 3) boron in a four-coordinate form not only does not contribute to the purification of the impurities but also penetrates the steel sheet during high temperature annealing to form $Fe_2B$, which causes repeated bending deterioration.

Citation List

Patent Documents

Patent Document 1: Japanese Unexamined Patent Application, First Publication No. 2017-128772

Patent Document 2: Japanese Unexamined Patent Application, First Publication No. 2020-15982

SUMMARY OF INVENTION

Technical Problem

During finish annealing, since an atmosphere at a center in a width direction of a coil passes less well than at ends in the width direction of the coil, a primary coating may not be sufficiently formed at the center in the width direction of the coil. When there is a difference in the formation of the primary coating between the ends in the width direction and the center in the width direction of the coil, this may cause a difference in the magnetic properties in the width direction of the grain-oriented electrical steel sheet, which is not preferable.

Patent Documents 1 and 2 described above do not consider the difference in the formation of the primary coating in the width direction of the coil.

The present invention has been made in view of the above problems. An object of the present invention is to provide an MgO powder, an MgO slurry, and methods of manufacturing the same for manufacturing a grain-oriented electrical steel sheet in which a difference of magnetic properties in a width direction is small, and a method of manufacturing the grain-oriented electrical steel sheet.

Solution to Problem

The gist of the present invention is as follows.

(1) An MgO powder according to one aspect of the present invention is an MgO powder including MgO particles,

in which an MgO content of the MgO powder is 90% or more,
a mass of MgO particles in which $La/Lb$ is 1.50 or more is 10% to 85% of a total mass of the MgO powder, where a major axis length of the MgO particles is denoted by $La$ and a minor axis length of the MgO particles is denoted by $Lb$ among the MgO particles, and
$Lf_{ave}/Lg_{ave}$ is 1.00 or more, where an average particle size of the MgO particles in which the $La/Lb$ is 1.50 or more is denoted by $Lf_{ave}$ and an average particle size of MgO particles in which the $La/Lb$ is less than 1.50 is denoted by $Lg_{ave}$.

(2) An MgO slurry according to another aspect of the present invention includes the MgO powder according to (1) and water.

(3) A method of manufacturing an MgO powder according to another aspect of the present invention is a method of manufacturing the MgO powder according to (1), that uses a raw material powder containing one or two or more kinds of raw material particles selected from the group consisting of magnesium hydroxide, basic magnesium carbonate, and magnesium carbonate, the method including:

obtaining the raw material powder by mixing raw material particles in which $la/lb$ is 1.50 or more and raw material particles in which the $la/lb$ is less than 1.50,
such that a mass of the raw material particles in which the $la/lb$ is 1.50 or more is 10% to 85% of a total mass of the raw material powder, and
such that $lf_{ave}/lg_{ave}$ is 1.00 or more,
where a major axis length of the raw material particles is denoted by $la$ and a minor axis length of the raw material particles is denoted by $lb$ among the raw material particles, and
where an average particle size of the raw material particles in which the $la/lb$ is 1.50 or more is denoted by $lf_{ave}$ and an average particle size of the raw material particles in which the $la/lb$ is less than 1.50 is denoted by $lg_{ave}$; and
calcining the raw material powder in a temperature range of 700°C to 1100°C for 5 to 120 minutes and pulverizing the raw material powder as necessary.

(4) A method of manufacturing an MgO slurry according to another aspect of the present invention is a method of manufacturing the MgO slurry according to (2), that uses a raw material powder containing one or two or more kinds of raw material particles selected from the group consisting of magnesium hydroxide, basic magnesium carbonate, and magnesium carbonate, and water, the method including:

obtaining the raw material powder by mixing raw material particles in which $la/lb$ is 1.50 or more and raw material particles in which the $la/lb$ is less than 1.50,
such that a mass of the raw material particles in which the $la/lb$ is 1.50 or more is 10% to 85% of a total mass of the raw material powder, and

such that $If_{ave}/Ig_{ave}$ is 1.00 or more,
where a major axis length of the raw material particles is denoted by la and a minor axis length of the raw material particles is denoted by lb among the raw material particles, and
where an average particle size of the raw material particles in which the la/lb is 1.50 or more is denoted by $If_{ave}$ and an average particle size of the raw material particles in which the la/lb is less than 1.50 is denoted by $Ig_{ave}$;
calcining the raw material powder in a temperature range of 700°C to 1100°C for 5 to 120 minutes and pulverizing the raw material powder as necessary; and
mixing the calcined raw material powder with the water.

(5) A method of manufacturing an MgO slurry according to another aspect of the present invention is a method of manufacturing the MgO slurry according to (2), that uses a raw material powder containing one or two or more kinds of raw material particles selected from the group consisting of magnesium hydroxide, basic magnesium carbonate, and magnesium carbonate, and water, the method including:

calcining each the raw material particle in which la/lb is 1.50 or more and the la/lb is less than 1.50 in a temperature range of 700°C to 1100°C for 5 to 120 minutes, and pulverizing the calcined raw material particles as necessary; and
mixing the calcined raw material particles in the water,
such that a mass of the raw material particles in which the la/lb is 1.50 or more is 10% to 85% of a total mass of the raw material powder, and
such that $If_{ave}/Ig_{ave}$ is 1.00 or more,
where a major axis length of the raw material particles is denoted by la and a minor axis length of the raw material particles is denoted by lb among the raw material particles,
where an average particle size of the raw material particles in which the la/lb is 1.50 or more is denoted by $If_{ave}$ and an average particle size of the raw material particles in which the la/lb is less than 1.50 is denoted by $Ig_{ave}$.

(6) A method of manufacturing a grain-oriented electrical steel sheet according to another aspect of the present invention includes: using the MgO powder according to (1).
(7) A method of manufacturing a grain-oriented electrical steel sheet according to another aspect of the present invention includes: using the MgO slurry according to (2).

Advantageous Effects of Invention

According to the above aspects of the present invention, it is possible to provide an MgO powder, an MgO slurry, and methods of manufacturing the same for manufacturing a grain-oriented electrical steel sheet in which a difference of magnetic properties in a width direction is small, and a method of manufacturing the grain-oriented electrical steel sheet.

DESCRIPTION OF EMBODIMENTS

An MgO powder, an MgO slurry, and methods of manufacturing the same, and a method of manufacturing a grain-oriented electrical steel sheet according to the present embodiment will be described in detail below. However, the present invention is not limited to configurations disclosed in the present embodiment, and various modifications can be made without departing from the gist of the present invention.

<MgO Powder>

The MgO powder according to the present embodiment is an MgO powder containing MgO particles,

in which an Mg content of the MgO powder is 90% or more,
a mass of MgO particles in which La/Lb is 1.50 or more is 10% to 85% of a total mass of the MgO powder, where a major axis length of the MgO particles is denoted by La and a minor axis length of the MgO particles is denoted by Lb among the MgO particles, and
$Lf_{ave}/Lg_{ave}$ is more than 1.00, where an average particle size of the MgO particles in which the La/Lb is 1.50 or more is denoted by $Lf_{ave}$ and an average particle size of MgO particles in which the La/Lb is less than 1.50 is denoted by $Lg_{ave}$.

Hereinafter, more detailed descriptions will be provided.
The MgO powder according to the present embodiment contains MgO particles. The MgO powder according to the present embodiment contains, for example, 50.0% or more of MgO particles. The amount of the MgO particles in the MgO powder is preferably 80.0 mass% or more, more preferably 90.0 mass% or more, and even more preferably 99.0 mass%.

The MgO powder may contain, for example, impurities such as Al, B, Fe, and Si. When the amount of each of the impurity elements is 0.5 mass% or less or the total amount thereof is 1.0 mass% or less, an effect on magnetic properties or coating properties of the grain-oriented electrical steel sheet is small.

Mg Content in MgO Powder: 90% or More

The Mg content in the MgO powder can be represented by the left side of the following expression. The fact that the Mg content in the MgO powder is 90% or more means that an Mg mass concentration [Mg] when the MgO powder is chemically analyzed satisfies the following expression. The chemical analysis is performed by quantitative analysis of elements using ICP-MS.

$$[\text{Mg}] \times 40/24 \geq 90\%$$

When the Mg content in the MgO powder is less than 90%, it is not possible to obtain a grain-oriented electrical steel sheet in which a difference of magnetic properties in a width direction is small. Therefore, the Mg content in the MgO powder is set to 90% or more. The Mg content in the MgO powder is preferably 95% or more.

Mass of MgO Particles in Which La/Lb Is 1.50 Or More: 10% to 85%

By setting a proportion of plate-like particles having a flat shape among the MgO particles contained in the MgO powder to be within a predetermined range, and controlling a ratio between an average particle size of plate-like particles and granular particles within a desired range, a contact frequency between the annealing separating agent and the steel sheet can be increased. As a result, it is possible to sufficiently form the primary coating even at the center in the width direction of the coil.

In the present embodiment, when a major axis length of the MgO particles included in the MgO powder is denoted by La and a minor axis length of the MgO particles is denoted by Lb, MgO particles in which La/Lb is 1.50 or more are regarded as plat-like particles. On the other hand, MgO particles in which La/Lb is less than 1.50 are regarded as granular particles.

There are cases where in the MgO powder, the MgO particles aggregate and the MgO particles are present as secondary particles. However, the major axis length and the minor axis length described here refer to a major axis length and a minor axis length of primary particles of the MgO particles.

A mass of the plat-like particles (MgO particles in which La/Lb is 1.50 or more) in the entire MgO powder is set to 10% to 85%. The mass of the plat-like particles is preferably 20% or more, and more preferably 30% or more. In addition, the mass of the plat-like particles is preferably 40% or less.

Ratio of Average Particle Sizes ($Lf_{ave}/Lg_{ave}$): 1.00 Or More

When the average particle size of the plate-like particles (MgO particles in which La/Lb is 1.50 or more) is denoted by $Lf_{ave}$, and the average particle size of the granular particles (MgO particles in which La/Lb is less than 1.50) is denoted by $Lg_{ave}$, $Lf_{ave}/Lg_{ave}$ is set to 1.00 or more. By increasing the ratio of the average particle size of the plate-like particles to the average particle size of the granular particles, the MgO particles has more contacts at the surface, thereby increasing the contact frequency between the steel sheet and the primary coating. $Lf_{ave}/Lg_{ave}$ is preferably 1.10 or more.

In addition, from the viewpoint of further reducing the change in shape in the width direction, the average particle size $Lf_{ave}$ of the plate-like particles and the average particle size $Lg_{ave}$ of the granular particles are each set to preferably less than 2.000 $\mu$m, more preferably 1.500 $\mu$m or less or 1.000 $\mu$m or less, and even more preferably 0.500 $\mu$m or less.

Hereinafter, a measurement method will be described.

A magnified photograph of the MgO particles in the MgO powder is taken using a scanning electron microscope (SEM). Among the MgO particles, one primary particle shape is traced, and a major axis length (La) and a minor axis length (Lb) of the primary particle are calculated by image analysis. This operation is performed on 50 or more particles randomly selected. Accordingly, MgO particles (plate-like particles) in which La/Lb is 1.50 or more and MgO particles (granular particles) in which La/Lb is less than 1.50 are specified.

The average particle size ($Lf_{ave}$) of the plate-like particles and the average particle size ($Lg_{ave}$) of the granular particles are obtained by calculating circle equivalent diameters of the specified plate-like particles and granular particles and calculating average values of the circle equivalent diameters.

Method of Measuring Mass of Granular Particles

From the same magnified photograph as when the average particle size ($Lf_{ave}$) of the plate-like particles and the average particle size ($Lg_{ave}$) of the granular particles are measured, La/Lb is calculated for 50 or more particles randomly selected, and a number frequency ff (%) of the MgO particles (plate-like particles) in which La/Lb is 1.50 or more and a number frequency fg (%) of the MgO particles (granular particles) in which La/Lb is less than 1.50 are calculated. The mass% (Wf (%)) of the granular particles is obtained by using the obtained value and Expression (1).

$$\text{Wf} = \text{fg} \times Lg_{ave}^3/(50 \times (Lf_{ave}^3 + Lg_{ave}^3)) \ldots (1)$$

<MgO Slurry>

The MgO slurry according to the present embodiment contains the MgO powder containing the MgO particles described above and water. Since the MgO powder and the MgO particles have been described above, the description thereof will be omitted. A mass of the MgO powder in the MgO slurry may be set to 5% to 30%.
In a case where the above-described measurement is performed on the MgO powder in the MgO slurry, the MgO slurry is held in a thermostatic chamber at 80°C for a predetermined time to evaporate moisture, and the above-described measurement is performed on the resulting MgO powder.

<Method of Manufacturing MgO Powder>

Next, a method of manufacturing the MgO powder described above will be described.
The method of manufacturing the MgO powder according to the present embodiment is a method of manufacturing an MgO powder, that uses a raw material powder containing one or two or more kinds of raw material particles selected from the group consisting of magnesium hydroxide, basic magnesium carbonate, and magnesium carbonate, the method including:

obtaining the raw material powder by mixing raw material particles in which la/lb is 1.50 or more and raw material particles in which the la/lb is less than 1.50,
such that a mass of the raw material particles in which the la/lb is 1.50 or more is 10% to 85% of a total mass of the raw material powder, and
such that $lf_{ave}/lg_{ave}$ is 1.00 or more,
where a major axis length of the raw material particles is denoted by la and a minor axis length of the raw material particles is denoted by lb among the raw material particles,
where an average particle size of the raw material particles in which the la/lb is 1.50 or more is denoted by $lf_{ave}$ and an average particle size of the raw material particles in which the la/lb is less than 1.50 is denoted by $lg_{ave}$; and

calcining the raw material powder in a temperature range of 700°C to 1100°C for 5 to 120 minutes and pulverizing the raw material powder as necessary.

Raw Material Powder

The raw material powder contains one or two or more kinds of raw material particles selected from the group consisting of magnesium hydroxide, basic magnesium carbonate, and magnesium carbonate. In addition to these raw material particles, magnesium chloride, calcium carbonate, and calcium chloride may be contained.

Mass of Raw Material Particles in Which la/lb Is 1.50 Or More: 10% to 85%

Among the raw material particles in the raw material powder, when the major axis length of the raw material particles is denoted by la and the minor axis length of the raw material particles is denoted by lb, the mass of the raw material particles in which la/lb is 1.50 or more is set to 10% to 85% of the total mass of the raw material powder. Accordingly, the mass of the plate-like particles in the MgO powder can be controlled within a preferable range. The mass of the raw material particles in which la/lb is 1.50 or more is preferably 20% or more, and more preferably 30% or more. In addition, the mass of the raw material particles in which la/lb is 1.50 or more is preferably 40% or less.

Ratio of Average Particle Sizes ($lf_{ave}/lg_{ave}$): 1.00 Or More

When the average particle size of the raw material particles in which la/lb is 1.50 or more is denoted by $lf_{ave}$, and the average particle size of the raw material particles in which la/lb is 1.50 or more is denoted by $lg_{ave}$, $lf_{ave}/lg_{ave}$ is set to 1.00 or more. Accordingly, the average particle size of the plate-like particles and the average particle size of the granular particles in the MgO powder can be controlled within preferable ranges. $lf_{ave}/lg_{ave}$ is preferably 1.10 or more.

In addition, from the viewpoint of further reducing the change in shape in the width direction, the average particle size $lf_{ave}$ of the plate-like particles is preferably set to 10.000 $\mu$m or less. Furthermore, the average particle size $lf_{ave}$ of the plate-like particles and the average particle size $lg_{ave}$ of the granular particles are each set to preferably less than 2.000 $\mu$m, more preferably 1.500 $\mu$m or less or 1.000 $\mu$m or less, and even more preferably 0.500 $\mu$m or less.

In order to control the mass and the ratio ($lf_{ave}/lg_{ave}$) between the average particle sizes of the raw material particles in which la/lb is 1.50 or more within the above ranges, a mixing ratio of two or more kinds of raw material particles having different average particle sizes, major axis lengths, and minor axis lengths may be adjusted.

The major axis length, the minor axis length, and the average particle size of the raw material powder may be measured by the same method as in the case of the MgO powder described above.

Next, the raw material powder is calcined in a temperature range of 700°C to 1100°C for 5 to 120 minutes. Accordingly, the MgO powder can be obtained. After the calcination, the MgO powder may be pulverized by a method using a ball mill or the like as necessary. In these pulverizing methods, the primary particles of the raw material powder are not destroyed.

A calcination temperature is preferably 720°C or higher, and more preferably 750°C or higher. In addition, the calcination temperature is preferably 1080°C or lower, and more preferably 1040°C or lower. A calcination time is set to 5 to 120 minutes in order to preferably control the Mg content in the MgO powder. From the viewpoint of eliminating unevenness in the calcination, the calcination time is preferably 8 minutes or longer, and more preferably 10 minutes or longer. On the other hand, from the viewpoint of economic efficiency, the calcination time is preferably 80 minutes or shorter, and more preferably 60 minutes or shorter.

A calcination atmosphere is preferably an air atmosphere or a nitrogen atmosphere. Atmospheres other than these atmospheres are economically disadvantageous and thus are undesirable.

<Method of Manufacturing MgO Slurry>

Examples of the method of manufacturing the MgO slurry according to the present embodiment include a method of mixing a raw material powder and water and a method of mixing two or more kinds of raw material particles in water. The only difference between these two methods is whether the mixing of two or more kinds of raw material particles is performed before mixing with water or simultaneously with mixing with water.

In the method of mixing a raw material powder and water, the MgO slurry is obtained by mixing the above-described raw material powder and water.

More specifically, the method of manufacturing the MgO slurry uses a raw material powder containing one or two or more kinds of raw material particles selected from the group consisting of magnesium hydroxide, basic magnesium carbonate, and magnesium carbonate, and water, the method including:

obtaining the raw material powder by mixing raw material particles in which la/lb is 1.50 or more and raw material particles in which the la/lb is less than 1.50,
such that a mass of the raw material particles in which the la/lb is 1.50 or more is 10% to 85% of a total mass of the raw material powder, and
such that $lf_{ave}/lg_{ave}$ is 1.00 or more,
where a major axis length of the raw material particles is denoted by la and a minor axis length of the raw material particles is denoted by lb among the raw material particles, and
where an average particle size of the raw material particles in which the la/lb is 1.50 or more is denoted by $lf_{ave}$ and an average particle size of the raw material particles in which the la/lb is less than 1.50 is denoted by $lg_{ave}$;
calcining the raw material powder in a temperature range of 700°C to 1100°C for 5 to 120 minutes and pulverizing the raw material powder as necessary; and
mixing the calcined raw material powder with the water.

In the method of mixing two or more kinds of raw material particles in water, the two or more kinds of raw material particles are mixed in water such that the raw material powder after the mixing has the above-described mass or the ratio of the average particle sizes, thereby obtaining the MgO slurry.

More specifically, the method of manufacturing the MgO slurry uses a raw material powder containing one or two or more kinds of raw material particles selected from the group consisting of magnesium hydroxide, basic magnesium carbonate, and magnesium carbonate, and water, the method including:

calcining each the raw material particle in which la/lb is 1.50 or more and the la/lb is less than 1.50 in a temperature range of 700°C to 1100°C for 5 to 120 minutes, and pulverizing the calcined raw material particles as necessary; and mixing the calcined raw material particles in the water, such that a mass of the raw material particles in which the la/lb is 1.50 or more is 10% to 85% of a total mass of the raw material powder, and such that $lf_{ave}/lg_{ave}$ is 1.00 or more, where a major axis length of the raw material particles is denoted by la and a minor axis length of the raw material particles is denoted by lb among the raw material particles, and where an average particle size of the raw material particles in which the la/lb is 1.50 or more is denoted by $lf_{ave}$ and an average particle size of the raw material particles in which the la/lb is less than 1.50 is denoted by $lg_{ave}$.

<Method of Manufacturing Grain-Oriented Electrical Steel Sheet>

In the method of manufacturing a grain-oriented electrical steel sheet according to the present embodiment, the MgO powder described above is used as an annealing separating agent. The method of manufacturing a grain-oriented electrical steel sheet according to the present embodiment includes, for example, a hot rolling step of performing hot rolling on a slab to obtain a hot-rolled sheet, a hot-rolled sheet annealing step of performing annealing on the hot-rolled sheet, a cold rolling step of performing cold rolling on the hot-rolled sheet after the hot-rolled sheet annealing step to obtain a cold-rolled sheet, a decarburization annealing step of performing decarburization annealing on the cold-rolled sheet, and a final annealing step of applying an annealing separating agent containing the MgO powder to the cold-rolled sheet after the decarburization annealing step, drying the cold-rolled sheet, and performing final annealing on the cold-rolled sheet. According to this manufacturing method using the MgO powder or the MgO slurry according to the present embodiment, it is possible to manufacture a grain-oriented electrical steel sheet having small differences in magnetic properties in the width direction.

In the present embodiment, as the annealing separating agent to be applied before the final annealing, an annealing separating agent obtained by mixing the MgO powder according to the present embodiment described above with water to obtain an MgO slurry is used.

In the manufacturing method, with respect to a chemical composition of the slab and conditions of each step, known manufacturing conditions for grain-oriented electrical steel sheets can be applied, except for the annealing separating agent used.

Examples

Next, effects of one aspect of the present invention will be more specifically described using examples, but conditions in the examples are simply examples of the conditions adopted to confirm the feasibility and effects of the present invention, and the present invention is not limited to these examples of the conditions. The present invention may adopt various conditions to achieve the object of the present invention without departing from the scope of the present invention.

(Example 1)

Raw material particles having the average particle size, the major axis length la of the primary particles, the minor axis length lb of the primary particles, the average aspect ratio (la/lb), and the particle size ratio ($lf_{ave}/lg_{ave}$) shown in Table 1 were each calcined in a temperature range of 700°C to 1100°C for 5 to 120 minutes and each pulverized to obtain MgO particles 1 and MgO particles 2. The MgO particles 1 and the MgO particles 2 were mixed with water to obtain an annealing separating agent (aqueous slurry).

The average particle sizes of the MgO particles 1 and the MgO particles 2 are not shown in the table.

In the obtained annealing separating agent, MgO particles (plate-like particles) in which La/Lb was 1.50 or more and MgO particles (granular particles) in which La/Lb was less than 1.50 were specified from the MgO powder obtained by evaporating moisture by the above-described method, and the amounts, average aspect ratios, average particle sizes, and particle size ratios ($Lf_{ave}/Lg_{ave}$) thereof were obtained.

In the test numbers satisfying the preferable conditions, the MgO content was 90% or more, the mass of the MgO particles in which La/Lb was 1.50 or more was 10% to 85% of the total mass of the MgO powder, and $Lf_{ave}/Lg_{ave}$ was 1.00 or more.

Next, the annealing separating agent was applied to a cold-rolled steel sheet after primary recrystallization annealing. The cold-rolled steel sheet to which the annealing separating agent was applied on the surface was subjected to a baking treatment at 300°C for 30 seconds in any of the test numbers to dry the annealing separating agent. After the baking treatment, a final annealing treatment was performed. The final annealing treatment was a treatment of holding the steel sheet at 1200°C for 20 hours in any of the test numbers.

By the above manufacturing steps, a grain-oriented electrical steel sheet having a base steel sheet and a glass coating containing a composite oxide such as forsterite ($Mg_2SiO_4$) was manufactured. 10 or more samples, which have 60 mm in the width direction $\times$ 300 mm in the length direction of the obtained grain-oriented electrical steel sheet, were collected from the same longitudinal position of the obtained grain-oriented electrical steel sheet. A magnetic field of 800 A/m was applied to each sample by single sheet magnetic testing (SST) to determine the magnetic flux density B8. The difference between the sample with the lowest magnetic flux density and the sample with the highest magnetic flux density was calculated to obtain a magnetic unevenness in the width direction (T).

In a case where the magnetic unevenness in the width direction (T) was less than 0.015 T, the grain-oriented electrical steel sheet was determined to be acceptable as a grain-oriented electrical steel sheet having a small difference of the magnetic properties in the width direction. On the other hand, in a case where the magnetic unevenness in the width direction (T) was 0.015 T or more, the grain-oriented electrical steel sheet was determined to be unacceptable as a grain-oriented electrical steel sheet having a large difference of the magnetic properties in the width direction.

The test results are shown in Table 1.

In Test Nos. 1 and 2, since the average aspect ratio of any of the MgO raw material particles was less than 1.50, the amount of MgO particles in which La/Lb was 1.50 or more was insufficient, and the magnetic unevenness in the width direction of the grain-oriented electrical steel sheet was 0.015 T or more.

In Test No. 6, since the blending amount of the MgO raw material particles having a large aspect ratio was small, the amount of MgO particles in which La/Lb was 1.50 or more was insufficient, and the magnetic unevenness in the width direction of the grain-oriented electrical steel sheet was 0.015 T or more.

In Test No. 7, since the blending amount of the MgO raw material particles having a large aspect ratio was large, the amount of the MgO particles in which La/Lb was 1.50 or more was excessive, and the magnetic unevenness in the width direction of the grain-oriented electrical steel sheet was 0.015 T or more.

In Test Nos. 3 to 5, 8 to 11, and 13 to 18, the average aspect ratio of the two kinds of MgO raw material particles was within a preferable range, and the particle size ratio and the amount thereof were also appropriate. Therefore, since the mass and $Lf_{ave}/Lg_{ave}$ of the MgO particles in which La/Lb was 1.50 or more were within preferable ranges, the magnetic unevenness in the width direction of the grain-oriented electrical steel sheet was less than 0.015 T.

In particular, in Test Nos. 8 to 11, the magnetic unevenness in the width direction of the grain-oriented electrical steel sheet was 0.010 T or less. In these test numbers, it was assumed that the adhesion state of the annealing separating agent was further improved since $Lf_{ave}/Lg_{ave}$ was 1.10 or more

[Table 1]

| Test No. | MgO raw material particles 1 | | | | | MgO raw material particles 2 | | | | | Particle size ratio ($Lf_{ave}/Lg_{ave}$) - | Magnetic unevenness in width direction T |
| | Amount mass% | Average particle size μm | Average major axis length la of primary particles μm | Average minor axis length lb of primary particles μm | Average aspect ratio (la/lb) - | Amount mass% | Average particle size μm | Average major axis length la of primary particles μm | Average minor axis length lb of primary particles μm | Average aspect ratio (la/lb) - | | |
|---|---|---|---|---|---|---|---|---|---|---|---|---|
| 1 | 40 | 0.047 | 0.050 | 0.044 | 1.14 | 60 | 0.041 | 0.043 | 0.038 | 1.13 | 1.16 | 0.021 |
| 2 | 40 | 0.074 | 0.081 | 0.067 | 1.21 | 60 | 0.041 | 0.043 | 0.038 | 1.13 | 1.83 | 0.019 |
| 3 | 30 | 0.077 | 0.093 | 0.061 | 1.52 | 70 | 0.073 | 0.077 | 0.069 | 1.12 | 1.05 | 0.013 |
| 4 | 45 | 0.094 | 0.127 | 0.061 | 2.08 | 55 | 0.087 | 0.088 | 0.086 | 1.02 | 1.08 | 0.013 |
| 5 | 50 | 0.117 | 0.189 | 0.044 | 4.30 | 50 | 0.108 | 0.111 | 0.104 | 1.07 | 1.08 | 0.012 |
| 6 | 5 | 0.081 | 0.099 | 0.063 | 1.57 | 95 | 0.078 | 0.078 | 0.077 | 1.01 | 1.05 | 0.015 |
| 7 | 90 | 0.076 | 0.098 | 0.054 | 1.81 | 10 | 0.041 | 0.043 | 0.038 | 1.13 | 1.88 | 0.016 |
| 8 | 20 | 0.073 | 0.090 | 0.055 | 1.64 | 80 | 0.061 | 0.066 | 0.055 | 1.20 | 1.20 | 0.008 |
| 9 | 25 | 0.080 | 0.099 | 0.061 | 1.62 | 75 | 0.050 | 0.052 | 0.048 | 1.08 | 1.60 | 0.010 |
| 10 | 30 | 0.077 | 0.092 | 0.061 | 1.51 | 70 | 0.033 | 0.033 | 0.032 | 1.03 | 2.35 | 0.009 |
| 11 | 35 | 0.082 | 0.099 | 0.064 | 1.55 | 65 | 0.018 | 0.018 | 0.017 | 1.06 | 4.66 | 0.010 |
| 12 | 35 | 0.082 | 0.099 | 0.064 | 1.55 | 65 | 0.083 | 0.088 | 0.077 | 1.14 | 0.99 | 0.015 |
| 13 | 25 | 2.052 | 4.250 | 0.988 | 4.30 | 75 | 1.411 | 1.355 | 1.323 | 1.02 | 1.45 | 0.014 |
| 14 | 25 | 1.842 | 4.110 | 0.822 | 5.00 | 75 | 1.411 | 1.355 | 1.323 | 1.02 | 1.31 | 0.013 |
| 15 | 25 | 1.288 | 2.816 | 0.588 | 4.79 | 75 | 0.823 | 0.822 | 0.812 | 1.01 | 1.57 | 0.012 |
| 16 | 25 | 0.635 | 1.244 | 0.322 | 3.86 | 75 | 0.339 | 0.355 | 0.319 | 1.11 | 1.87 | 0.011 |
| 17 | 25 | 1.453 | 11.211 | 0.188 | 59.63 | 75 | 0.109 | 0.111 | 0.104 | 1.07 | 13.49 | 0.014 |
| 18 | 25 | 1.288 | 9.550 | 0.172 | 55.52 | 75 | 0.109 | 0.111 | 0.104 | 1.07 | 13.49 | 0.013 |

The underlines indicate values outside the ranges of the present invention or undesirable properties.

(Example 2)

The MgO raw material particles 1 shown in Table 2 were calcined under the conditions shown in Table 2 to obtain MgO particles 1. In addition, the MgO raw material particles 2 shown in Table 3 were calcined under the conditions shown in Table 3 to obtain MgO particles 2. The MgO particles 1 and the MgO particles 2 were mixed with each other in the blending amounts shown in Tables 2 and 3 to obtain the MgO powder shown in Table 4. The obtained MgO powder was mixed with water to obtain an annealing separating agent (aqueous slurry).

In the obtained annealing separating agent, MgO particles (plate-like particles) in which La/Lb was 1.50 or more and MgO particles (granular particles) in which La/Lb was less than 1.50 were specified from the MgO powder obtained by evaporating moisture by the above-described method, and the amounts, average aspect ratios, average particle sizes, and particle size ratios ($Lf_{ave}/Lg_{ave}$) thereof were obtained.

Next, the annealing separating agent was applied to a cold-rolled steel sheet after primary recrystallization annealing. The cold-rolled steel sheet to which the annealing separating agent was applied on the surface was subjected to a baking treatment at 300°C for 30 seconds in any of the test numbers to dry the annealing separating agent. After the baking treatment, a final annealing treatment was performed. The final annealing treatment was a treatment of holding the steel sheet at 1200°C for 20 hours in any of the test numbers.

By the above manufacturing steps, a grain-oriented electrical steel sheet having a base steel sheet and a glass coating containing a composite oxide such as forsterite ($Mg_2SiO_4$) was manufactured.

For the obtained grain-oriented electrical steel sheet, the magnetic unevenness in the width direction was obtained in the same manner as in Example 1.

Table 4 shows the test results.

In Test Nos. 19, 21, 23 and 24, since the calcination conditions of the MgO raw material particles were outside the preferable conditions, the raw material remained and the Mg content in the MgO powder after calcination was 90% or less. As a result, the magnetic inhomogeneity of the grain-oriented electrical steel sheet in the width direction was 0.015 T or more.

In Test Nos. 20 and 22, the calcination conditions of the MgO raw material particles were outside the preferable conditions, the aspect ratio of the plate-like MgO particles decreased, deformation of the plate-like particles due to sintering progressed, and MgO particles in which La/Lb was 1.50 or more were insufficient. As a result, the magnetic unevenness in the width direction of the grain-oriented electrical steel sheet was 0.015 T or more.

In Test Nos. 25 and 26, since the average aspect ratio of all the raw material particles was less than 1.50, the amount of MgO particles in which La/Lb was 1.50 or more were insufficient. As a result, the magnetic unevenness in the width direction of the grain-oriented electrical steel sheet was 0.015 T or more.

In Test Nos. 27 and 28, since the amount of MgO particles having a large aspect ratio was outside the preferable range, MgO particles in which La/Lb was less than 1.50 could not be obtained with the desired amount. As a result, the magnetic unevenness in the width direction of the grain-oriented electrical steel sheet was 0.015 T or more.

In Test Nos. 29 and 30, since the particle size ratio between the two kinds of MgO particles was within the preferable range and the amounts thereof were also appropriate, the magnetic unevenness in the width direction of the grain-oriented electrical steel sheet was less than 0.015 T.

In particular, in Test No. 30, the magnetic unevenness in the width direction of the grain-oriented electrical steel sheet was 0.010 T or less. In the Test No., it was assumed that the adhesion state of the annealing separating agent was further improved since $Lf_{ave}/Lg_{ave}$ was 1.10 or more.

[Table 2]

| Test No. | MgO raw material particles 1 | | | | | | | |
|---|---|---|---|---|---|---|---|---|
| | Kind | Calcination temperature °C | Calcination time min | Average particle size μm | Average major axis length la of primary particles μm | Average minor axis length lb of primary particles μm | Average aspect ratio (la/lb) - | Blending amount Mass% |
| 19 | Magnesium hydroxide | 650 | 15 | 0.063 | 0.082 | 0.044 | 1.86 | 40 |
| 20 | Basic magnesium carbonate | 1120 | 15 | 0.065 | 0.081 | 0.048 | 1.69 | 40 |
| 21 | Magnesium carbonate | 800 | 15 | 0.073 | 0.093 | 0.052 | 1.79 | 40 |
| 22 | Basic magnesium carbonate | 900 | 15 | 0.065 | 0.081 | 0.048 | 1.69 | 40 |
| 23 | Magnesium hydroxide | 1000 | 3 | 0.063 | 0.082 | 0.044 | 1.86 | 40 |
| 24 | Magnesium hydroxide | 1000 | 15 | 0.063 | 0.082 | 0.044 | 1.86 | 40 |
| 25 | Basic magnesium carbonate | 1000 | 15 | 0.077 | 0.091 | 0.062 | 1.47 | 40 |
| 26 | Magnesium hydroxide | 1100 | 15 | 0.079 | 0.088 | 0.069 | 1.28 | 40 |
| 27 | Magnesium hydroxide | 1000 | 15 | 0.063 | 0.082 | 0.044 | 1.86 | 5 |
| 28 | Magnesium hydroxide | 1000 | 15 | 0.063 | 0.082 | 0.044 | 1.86 | 95 |

(continued)

| Test No. | MgO raw material particles 1 | | | | | | | |
| --- | --- | --- | --- | --- | --- | --- | --- | --- |
| | Kind | Calcination temperature °C | Calcination time min | Average particle size μm | Average major axis length la of primary particles μm | Average minor axis length lb of primary particles μm | Average aspect ratio (la/lb) - | Blending amount Mass% |
| 29 | Basic magnesium carbonate | 1000 | 15 | 0.063 | 0.081 | 0.048 | 1.69 | 40 |
| 30 | Basic magnesium carbonate | 1000 | 15 | 0.065 | 0.081 | 0.048 | 1.69 | 40 |
| 31 | Basic magnesium carbonate | 1000 | 15 | 2.215 | 4.220 | 1.140 | 1.90 | 40 |
| 32 | Basic magnesium carbonate | 1000 | 15 | 1.933 | 3.288 | 1.114 | 1.90 | 40 |
| 33 | Basic magnesium carbonate | 1000 | 15 | 1.377 | 10.332 | 0.180 | 57.40 | 40 |
| 34 | Basic magnesium carbonate | 1000 | 15 | 1.159 | 9.277 | 0.142 | 65.33 | 40 |
| The underlines indicate values outside the ranges of the present invention. | | | | | | | | |

[Table 3]

| Test No. | MgO raw material particles 2 | | | | | | | |
| --- | --- | --- | --- | --- | --- | --- | --- | --- |
| | Kind | Calcination temperature °C | Calcination time min | Average particle size μm | Average major axis length la of primary particles μm | Average minor axis length lb of primary particles μm | Average aspect ratio (la/lb) - | Blending amount Mass% |
| 19 | Basic magnesium carbonate | 1000 | 15 | 0.039 | 0.040 | 0.038 | 1.05 | 60 |
| 20 | Basic magnesium carbonate | 1000 | 15 | 0.039 | 0.040 | 0.038 | 1.05 | 60 |
| 21 | Magnesium carbonate | 680 | 15 | 0.034 | 0.039 | 0.029 | 1.34 | 60 |
| 22 | Basic magnesium carbonate | 1140 | 15 | 0.039 | 0.040 | 0.038 | 1.05 | 60 |

(continued)

| Test No. | MgO raw material particles 2 | | | | | | | |
|---|---|---|---|---|---|---|---|---|
| | Kind | Calcination temperature °C | Calcination time min | Average particle size μm | Average major axis length la of primary particles μm | Average minor axis length lb of primary particles μm | Average aspect ratio (la/lb) - | Blending amount Mass% |
| 23 | Magnesium hydroxide | 1000 | 15 | 0.034 | 0.035 | 0.033 | 1.06 | 60 |
| <u>24</u> | Magnesium hydroxide | 1000 | <u>3</u> | 0.034 | 0.035 | 0.033 | 1.06 | 60 |
| <u>25</u> | Magnesium hydroxide | 1000 | 15 | 0.034 | 0.035 | 0.033 | <u>1.06</u> | 60 |
| <u>26</u> | Basic magnesium carbonate | 1100 | 15 | 0.039 | 0.040 | 0.038 | <u>1.05</u> | 60 |
| 27 | Magnesium hydroxide | 1000 | 15 | 0.034 | 0.035 | 0.033 | 1.06 | 95 |
| 28 | Magnesium hydroxide | 1000 | 15 | 0.034 | 0.035 | 0.033 | 1.06 | 5 |
| 29 | Basic magnesium carbonate | 1000 | 15 | 0.061 | 0.062 | 0.060 | 1.03 | 60 |
| 30 | Magnesium hydroxide | 1000 | 15 | 0.034 | 0.035 | 0.033 | 1.06 | 60 |
| 31 | Magnesium hydroxide | 1000 | 15 | 0.338 | 0.355 | 0.315 | 1.13 | 60 |
| 32 | Magnesium hydroxide | 1000 | 15 | 0.416 | 0.425 | 0.399 | 1.07 | 60 |
| 33 | Magnesium hydroxide | 1000 | 15 | 0.034 | 0.035 | 0.033 | 1.06 | 60 |
| 34 | Magnesium hydroxide | 1000 | 15 | 0.034 | 0.035 | 0.033 | 1.06 | 60 |
| The underlines indicate values outside the ranges of the present invention. | | | | | | | | |

[Table 4]

| Test No. | Raw material particles Particle size ratio | Plate-like particles | | | Granular particles | | | MgO powder MgO content % | Particle size ratio ($Lf_{ave}/Lg_{ave}$) - | Magnetic unevenness in width direction T |
|---|---|---|---|---|---|---|---|---|---|---|
| | | Average aspect ratio (La/Lb) | Amount mass% | Average particle size μm | Average aspect ratio (La/Lb) | Amount mass% | Average particle size μm | | | |
| 19 | 1.62 | 1.86 | 40 | 0.063 | 1.05 | 60 | 0.039 | 78 | 1.62 | 0.017 |
| 20 | 1.65 | - | 0 | - | 1.21 | 100 | 0.065 | 98 | - | 0.017 |
| 21 | 2.13 | 1.79 | 40 | 0.073 | 1.34 | 60 | 0.034 | 79 | 2.15 | 0.018 |
| 22 | 1.65 | - | 0 | - | 1.18 | 100 | 0.073 | 100 | - | 0.019 |
| 23 | 1.85 | 1.86 | 40 | 0.063 | 1.06 | 60 | 0.034 | 89 | 1.85 | 0.017 |
| 24 | 1.85 | 1.86 | 40 | 0.063 | 1.06 | 60 | 0.034 | 88 | 1.85 | 0.018 |
| 25 | 2.25 | - | 0 | - | 1.23 | 100 | 0.055 | 98 | - | 0.018 |
| 26 | 2.01 | - | 0 | - | 1.22 | 100 | 0.480 | 98 | - | 0.019 |
| 27 | 1.85 | 1.86 | 5 | 0.063 | 1.06 | 95 | 0.034 | 97 | 1.85 | 0.015 |
| 28 | 1.85 | 1.86 | 95 | 0.063 | 1.06 | 5 | 0.034 | 97 | 1.85 | 0.016 |
| 29 | 1.06 | 1.69 | 40 | 0.065 | 1.03 | 60 | 0.061 | 97 | 1.06 | 0.012 |
| 30 | 1.90 | 1.69 | 40 | 0.065 | 1.06 | 60 | 0.034 | 97 | 1.90 | 0.009 |
| 31 | 6.56 | 1.90 | 40 | 2.215 | 1.07 | 60 | 0.338 | 97 | 6.56 | 0.014 |
| 32 | 4.65 | 1.90 | 40 | 1.933 | 1.05 | 60 | 0.416 | 97 | 4.65 | 0.013 |
| 33 | 40.34 | 57.40 | 40 | 1.377 | 1.06 | 60 | 0.034 | 97 | 40.34 | 0.014 |
| 34 | 33.90 | 65.33 | 40 | 1.159 | 1.06 | 60 | 0.034 | 97 | 33.90 | 0.013 |

The underlines indicate values outside the ranges of the present invention or undesirable properties.

(Examples 3)

The MgO raw material particles 1 and the MgO raw material particles 2 shown in Tables 5 and 6 were mixed in the blending amounts shown in Tables 5 and 6 to obtain raw material powders. The obtained raw material powder was calcined under the conditions shown in Table 7. As a result, the MgO powder shown in Table 7 was obtained. The obtained MgO powder and water were mixed to obtain an annealing separating agent (aqueous slurry).

In the obtained annealing separating agent, MgO particles (plate-like particles) in which La/Lb was 1.50 or more and MgO particles (granular particles) in which La/Lb was less than 1.50 were specified from the MgO powder obtained by evaporating moisture by the above-described method, and the amounts, average aspect ratios, average particle sizes, and particle size ratios ($Lf_{ave}/Lg_{ave}$) thereof were obtained.

Next, the annealing separating agent was applied to a cold-rolled steel sheet after primary recrystallization annealing. The cold-rolled steel sheet to which the annealing separating agent was applied on the surface was subjected to a baking treatment at 300°C for 30 seconds in any of the test numbers to dry the annealing separating agent. After the baking treatment, a final annealing treatment was performed. The final annealing treatment was a treatment of holding the steel sheet at 1200°C for 20 hours in any of the test numbers.

By the above manufacturing steps, a grain-oriented electrical steel sheet having a base steel sheet and a glass coating containing a composite oxide such as forsterite ($Mg_2SiO_4$) was manufactured.

For the obtained grain-oriented electrical steel sheet, the magnetic unevenness in the width direction was obtained in the same manner as in Example 1. Table 7 shows the test results.

In Test Nos. 35 and 37, since the calcination conditions of the MgO raw material particles were outside preferable conditions, the raw material remained, and the MgO content of the MgO powder after calcining was 90% or less. As a result, the magnetic unevenness in the width direction of the grain-oriented electrical steel sheet was 0.015 T or more.

In Test No. 36, the calcination conditions of the MgO raw material powder were outside preferable conditions, the calcination conditions of the MgO raw material particles were outside preferable conditions, the aspect ratio of the plate-like MgO particles decreased, deformation of the plate-like particles due to sintering progressed, and MgO particles in which La/Lb was 1.50 or more were insufficient. As a result, the magnetic unevenness in the width direction of the grain-oriented electrical steel sheet was 0.015 T or more.

In Test Nos. 38 and 39, since the average aspect ratio of all the MgO raw material particles was less than 1.50, the magnetic unevenness in the width direction of the grain-oriented electrical steel sheet having insufficient amount of MgO particles in which La/Lb of 1.50 or more was 0.015 T or more.

In Test Nos. 40 and 41, since the amount of the MgO raw material particles having a large aspect ratio was outside the preferable range, the magnetic unevenness in the width direction of the grain-oriented electrical steel sheet was 0.015 T or more.

In Test Nos. 42 and 43, since the particle size ratio between the two kinds of MgO particles was within the preferable range, and the amounts thereof were also appropriate, the magnetic unevenness in the width direction of the grain-oriented electrical steel sheet was less than 0.015 T.

In particular, in Test No. 43, the magnetic unevenness in the width direction of the grain-oriented electrical steel sheet was 0.010 T or less. In the Test No., it was assumed that the adhesion state of the annealing separating agent was further improved since $Lf_{ave}/Lg_{ave}$ was 1.10 or more

[Table 5]

| Test No. | MgO raw material particles 1 | | | | | |
| | Kind | Average particle size μm | Average major axis length la of primary particles μm | Average minor axis length lb of primary particles μm | Average aspect ratio (la/lb) - | Blending amount Mass% |
|---|---|---|---|---|---|---|
| 35 | Magnesium hydroxide | 0.063 | 0.082 | 0.044 | 1.86 | 40 |
| 36 | Basic magnesium carbonate | 0.065 | 0.081 | 0.048 | 1.69 | 40 |
| 37 | Magnesium carbonate | 0.073 | 0.093 | 0.052 | 1.79 | 40 |

(continued)

| Test No. | MgO raw material particles 1 | | | | | |
| --- | --- | --- | --- | --- | --- | --- |
| | Kind | Average particle size μm | Average major axis length la of primary particles μm | Average minor axis length lb of primary particles μm | Average aspect ratio (la/lb) - | Blending amount Mass% |
| 38 | Basic magnesium carbonate | 0.077 | 0.091 | 0.062 | 1.47 | 40 |
| 39 | Magnesium hydroxide | 0.079 | 0.088 | 0.069 | 1.28 | 40 |
| 40 | Magnesium hydroxide | 0.063 | 0.082 | 0.044 | 1.86 | 5 |
| 41 | Magnesium hydroxide | 0.063 | 0.082 | 0.044 | 1.86 | 90 |
| 42 | Basic magnesium carbonate | 0.065 | 0.081 | 0.048 | 1.69 | 40 |
| 43 | Basic magnesium carbonate | 0.065 | 0.081 | 0.048 | 1.69 | 40 |
| 44 | Magnesium hydroxide | 2.061 | 4.199 | 0.992 | 4.23 | 40 |
| 45 | Magnesium hydroxide | 1.956 | 3.157 | 1.188 | 2.66 | 40 |
| 46 | Magnesium hydroxide | 1.970 | 10.223 | 0.372 | 27.48 | 40 |
| 47 | Magnesium hydroxide | 1.682 | 9.772 | 0.282 | 34.65 | 40 |
| The underlines indicate values outside the ranges of the present invention. | | | | | | |

[Table 6]

| Test No. | MgO raw material particles 2 | | | | | |
| --- | --- | --- | --- | --- | --- | --- |
| | Kind | Average particle size μm | Average major axis length la of primary particles μm | Average minor axis length lb of primary particles μm | Average aspect ratio (la/lb) - | Blending amount Mass% |
| 35 | Basic magnesium carbonate | 0.039 | 0.040 | 0.038 | 1.05 | 60 |
| 36 | Basic magnesium carbonate | 0.039 | 0.040 | 0.038 | 1.05 | 60 |
| 37 | Magnesium carbonate | 0.034 | 0.039 | 0.029 | 1.34 | 60 |
| 38 | Magnesium hydroxide | 0.034 | 0.035 | 0.033 | 1.06 | 60 |

(continued)

| Test No. | MgO raw material particles 2 | | | | | |
|---|---|---|---|---|---|---|
| | Kind | Average particle size μm | Average major axis length la of primary particles μm | Average minor axis length lb of primary particles μm | Average aspect ratio (la/lb) - | Blending amount Mass% |
| <u>39</u> | Basic magnesium carbonate | 0.039 | 0.040 | 0.038 | <u>1.05</u> | 60 |
| 40 | Magnesium hydroxide | 0.034 | 0.035 | 0.033 | 1.06 | 95 |
| 41 | Magnesium hydroxide | 0.034 | 0.035 | 0.033 | 1.06 | 10 |
| 42 | Basic magnesium carbonate | 0.061 | 0.062 | 0.060 | 1.03 | 60 |
| 43 | Magnesium hydroxide | 0.034 | 0.035 | 0.033 | 1.06 | 60 |
| 44 | Magnesium hydroxide | 0.338 | 0.355 | 0.315 | 1.13 | 60 |
| 45 | Magnesium hydroxide | 0.416 | 0.425 | 0.399 | 1.07 | 60 |
| 46 | Magnesium hydroxide | 0.085 | 0.088 | 0.078 | 1.13 | 60 |
| 47 | Magnesium hydroxide | 0.085 | 0.088 | 0.078 | 1.13 | 60 |
| The underlines indicate values outside the ranges of the present invention. | | | | | | |

[Table 7]

| Test No. | Raw material powder Average particle size ratio | Calcination | | Plate-like particles | | | Granular particles | | | MgO powder | Particle size ratio $(Lf_{ave}/Lg_{ave})$ - | Magnetic unevenness in width direction T |
|---|---|---|---|---|---|---|---|---|---|---|---|---|
| | | Calcination temperature °C | Calcination time min | Average aspect ratio (La/Lb) - | Amount mass% | Average particle size μm | Average aspect ratio (La/Lb) - | Amount mass% | Average particle size μm | MgO content % | | |
| 35 | 1.62 | 580 | 20 | 1.86 | 40 | 0.063 | 1.05 | 60.00 | 0.039 | 88 | 1.62 | 0.018 |
| 36 | 1.65 | 1140 | 20 | - | 0 | - | 1.22 | 100.00 | 0.550 | 99 | - | 0.017 |
| 37 | 2.13 | 890 | 3 | 1.79 | 40 | 0.073 | 1.33 | 60.00 | 0.034 | 84 | 2.15 | 0.018 |
| 38 | 2.25 | 1000 | 15 | - | 0 | - | 1.33 | 100 | 0.036 | 98 | - | 0.017 |
| 39 | 2.01 | 1000 | 15 | - | 0 | - | 1.25 | 100 | 0.041 | 97 | - | 0.015 |
| 40 | 1.85 | 1000 | 15 | 1.89 | 5 | 0.065 | 1.07 | 95 | 0.038 | 97 | 1.72 | 0.016 |
| 41 | 1.85 | 1000 | 15 | 1.90 | 90 | 0.068 | 1.08 | 10 | 0.037 | 98 | 1.85 | 0.016 |
| 42 | 1.06 | 1000 | 15 | 1.69 | 40 | 0.071 | 1.06 | 60 | 0.066 | 98 | 1.08 | 0.013 |
| 43 | 1.90 | 1000 | 15 | 1.70 | 40 | 0.070 | 1.08 | 60 | 0.038 | 97 | 1.85 | 0.009 |
| 44 | 6.10 | 750 | 15 | 4.23 | 40 | 2.061 | 1.13 | 60 | 0.338 | 97 | 6.10 | 0.014 |
| 45 | 4.70 | 750 | 15 | 2.66 | 40 | 1.956 | 1.07 | 60 | 0.416 | 97 | 4.70 | 0.013 |
| 46 | 1.90 | 750 | 15 | 27.48 | 40 | 1.970 | 1.13 | 60 | 0.085 | 97 | 23.18 | 0.014 |
| 47 | 1.90 | 750 | 15 | 34.65 | 40 | 1.682 | 1.13 | 60 | 0.085 | 97 | 19.79 | 0.013 |

The underlines indicate values outside the ranges of the present invention or undesirable properties.

INDUSTRIAL APPLICABILITY

According to the above aspects of the present invention, it is possible to provide an MgO powder, an MgO slurry, and methods of manufacturing the same for manufacturing a grain-oriented electrical steel sheet in which a difference of magnetic properties in a width direction is small, and a method of manufacturing the grain-oriented electrical steel sheet.

**Claims**

1.   An MgO powder comprising:

MgO particles,
wherein an MgO content of the MgO powder is 90% or more,
a mass of MgO particles in which La/Lb is 1.50 or more is 10% to 85% of a total mass of the MgO powder, where a major axis length of the MgO particles is denoted by La and a minor axis length of the MgO particles is denoted by Lb among the MgO particles, and
$Lf_{ave}/Lg_{ave}$ is 1.00 or more, where an average particle size of the MgO particles in which the La/Lb is 1.50 or more is denoted by $Lf_{ave}$ and an average particle size of MgO particles in which the La/Lb is less than 1.50 is denoted by $Lg_{ave}$.

2.   An MgO slurry comprising:

the MgO powder according to Claim 1; and
water.

3.   A method of manufacturing the MgO powder according to Claim 1, that uses a raw material powder containing one or two or more kinds of raw material particles selected from the group consisting of magnesium hydroxide, basic magnesium carbonate, and magnesium carbonate, the method comprising:

obtaining the raw material powder by mixing raw material particles in which la/lb is 1.50 or more and raw material particles in which the la/lb is less than 1.50,
such that a mass of the raw material particles in which the la/lb is 1.50 or more is 10% to 85% of a total mass of the raw material powder, and
such that $lf_{ave}/lg_{ave}$ is 1.00 or more,
where a major axis length of the raw material particles is denoted by la and a minor axis length of the raw material particles is denoted by lb among the raw material particles, and
where an average particle size of the raw material particles in which the la/lb is 1.50 or more is denoted by $lf_{ave}$ and an average particle size of the raw material particles in which the la/lb is less than 1.50 is denoted by $lg_{ave}$; and
calcining the raw material powder in a temperature range of 700°C to 1100°C for 5 to 120 minutes and pulverizing the raw material powder as necessary.

4. A method of manufacturing the MgO slurry according to Claim 2, that uses a raw material powder containing one or two or more kinds of raw material particles selected from the group consisting of magnesium hydroxide, basic magnesium carbonate, and magnesium carbonate, and water, the method comprising:

obtaining the raw material powder by mixing raw material particles in which la/lb is 1.50 or more and raw material particles in which the la/lb is less than 1.50,
such that a mass of the raw material particles in which the la/lb is 1.50 or more is 10% to 85% of a total mass of the raw material powder, and
such that $lf_{ave}/lg_{ave}$ is 1.00 or more,
where a major axis length of the raw material particles is denoted by la and a minor axis length of the raw material particles is denoted by lb among the raw material particles, and
where an average particle size of the raw material particles in which the la/lb is 1.50 or more is denoted by $lf_{ave}$ and an average particle size of the raw material particles in which the la/lb is less than 1.50 is denoted by $lg_{ave}$;
calcining the raw material powder in a temperature range of 700°C to 1100°C for 5 to 120 minutes and pulverizing the raw material powder as necessary; and
mixing the calcined raw material powder with the water.

5. A method of manufacturing the MgO slurry according to Claim 2, that uses a raw material powder containing one or two or more kinds of raw material particles selected from the group consisting of magnesium hydroxide, basic magnesium carbonate, and magnesium carbonate, and water, the method comprising:

calcining each the raw material particle in which la/lb is 1.50 or more and the la/lb is less than 1.50 in a temperature range of 700°C to 1100°C for 5 to 120 minutes, and pulverizing the calcined raw material particles as necessary; and
mixing the calcined raw material particles in the water,
such that a mass of the raw material particles in which the la/lb is 1.50 or more is 10% to 85% of a total mass of the raw material powder, and
such that $lf_{ave}/lg_{ave}$ is 1.00 or more,
where a major axis length of the raw material particles is denoted by la and a minor axis length of the raw material particles is denoted by lb among the raw material particles, and
where an average particle size of the raw material particles in which the la/lb is 1.50 or more is denoted by $lf_{ave}$ and an average particle size of the raw material particles in which the la/lb is less than 1.50 is denoted by $lg_{ave}$.

6. A method of manufacturing a grain-oriented electrical steel sheet, the method comprising:
using the MgO powder according to Claim 1.

7. A method of manufacturing a grain-oriented electrical steel sheet, the method comprising:
using the MgO slurry according to Claim 2.

## INTERNATIONAL SEARCH REPORT

| International application No. |
| --- |
| **PCT/JP2024/014484** |

| | |
| --- | --- |
| **A.** | **CLASSIFICATION OF SUBJECT MATTER** |

*C01F 5/06*(2006.01)i; *C21D 8/12*(2006.01)i
FI:  C01F5/06; C21D8/12 B

According to International Patent Classification (IPC) or to both national classification and IPC

| | |
| --- | --- |
| **B.** | **FIELDS SEARCHED** |

Minimum documentation searched (classification system followed by classification symbols)

C01F5/00-5/42: C21D8/12;C21D9/46

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

JSTPlus/JMEDPlus/JST7580 (JDreamIII); JSTChina (JDreamIII)

| | |
| --- | --- |
| **C.** | **DOCUMENTS CONSIDERED TO BE RELEVANT** |

| Category* | Citation of document, with indication, where appropriate, of the relevant passages | Relevant to claim No. |
| --- | --- | --- |
| A | JP 2005-171387 A (JFE STEEL CORP.) 30 June 2005 (2005-06-30)<br>entire text | 1-7 |
| A | CN 111186850 A (NANJING BAOCHUN NEW MATERIAL TECHNOLOGY CO., LTD.)<br>22 May 2020 (2020-05-22)<br>entire text | 1-7 |
| A | WO 2021/084951 A1 (JFE STEEL CORP.) 06 May 2021 (2021-05-06)<br>entire text | 1-7 |
| A | JP 2019-119933 A (JFE STEEL CORP.) 22 July 2019 (2019-07-22)<br>entire text | 1-7 |
| A | WO 2021/084793 A1 (JFE STEEL CORP.) 06 May 2021 (2021-05-06)<br>entire text | 1-7 |
| A | JP 2020-164341 A (NIPPON STEEL CORP.) 08 October 2020 (2020-10-08)<br>entire text | 1-7 |

☑ Further documents are listed in the continuation of Box C.   ☑ See patent family annex.

| | |
| --- | --- |
| \* Special categories of cited documents:<br>"A" document defining the general state of the art which is not considered to be of particular relevance<br>"D" document cited by the applicant in the international application<br>"E" earlier application or patent but published on or after the international filing date<br>"L" document which may throw doubts on priority claim(s) or which is cited to establish the publication date of another citation or other special reason (as specified)<br>"O" document referring to an oral disclosure, use, exhibition or other means<br>"P" document published prior to the international filing date but later than the priority date claimed | "T" later document published after the international filing date or priority date and not in conflict with the application but cited to understand the principle or theory underlying the invention<br>"X" document of particular relevance; the claimed invention cannot be considered novel or cannot be considered to involve an inventive step when the document is taken alone<br>"Y" document of particular relevance; the claimed invention cannot be considered to involve an inventive step when the document is combined with one or more other such documents, such combination being obvious to a person skilled in the art<br>"&" document member of the same patent family |

| Date of the actual completion of the international search | Date of mailing of the international search report |
| --- | --- |
| **06 June 2024** | **18 June 2024** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (July 2022)

## INTERNATIONAL SEARCH REPORT

International application No.

**PCT/JP2024/014484**

### C. DOCUMENTS CONSIDERED TO BE RELEVANT

| Category* | Citation of document, with indication, where appropriate, of the relevant passages | Relevant to claim No. |
|---|---|---|
| A | JP 2013-234112 A (KYOWA CHEM. IND. CO., LTD.) 21 November 2013 (2013-11-21) entire text | 1-7 |
| A | JP 2009-7215 A (SAKAI CHEM. IND. CO., LTD.) 15 January 2009 (2009-01-15) entire text | 1-7 |

Form PCT/ISA/210 (second sheet) (July 2022)

## INTERNATIONAL SEARCH REPORT
### Information on patent family members

International application No.

**PCT/JP2024/014484**

| Patent document cited in search report | | | Publication date (day/month/year) | Patent family member(s) | Publication date (day/month/year) |
|---|---|---|---|---|---|
| JP | 2005-171387 | A | 30 June 2005 | (Family: none) | |
| CN | 111186850 | A | 22 May 2020 | (Family: none) | |
| WO | 2021/084951 | A1 | 06 May 2021 | EP 004015095 A1 entire text CN 114555246 A KR 10-2022-0067546 A | |
| JP | 2019-119933 | A | 22 July 2019 | (Family: none) | |
| WO | 2021/084793 | A1 | 06 May 2021 | EP 004026930 A1 entire text CN 114555860 A KR 10-2022-0065863 A | |
| JP | 2020-164341 | A | 08 October 2020 | (Family: none) | |
| JP | 2013-234112 | A | 21 November 2013 | (Family: none) | |
| JP | 2009-7215 | A | 15 January 2009 | (Family: none) | |

Form PCT/ISA/210 (patent family annex) (July 2022)

22

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2023063670 A
- JP 2017128772 A
- JP 2020015982 A